# EUROPEAN PATENT APPLICATION

(11) **EP 1 006 443 A2**
(43) Date of publication of application: **07.06.2000**
(21) Application number: 99309498.6
(22) Date of filing: 29.11.1999
(51) Int. Cl.: G06F 9/46

(54) **A method of and an apparatus for conventing an event of a distributed application and recording madia for storing the method**

(30) Priority: 30.11.1998 JP 33855598
(71) Applicant: HITACHI, LTD., Chiyoda-ku, Tokyo (JP)
(72) Inventor: Sato, Yoshio, Yokohama-shi (JP); Matsumura, Eiji, Yokohama-shi (JP)
(74) Representative: Hackney, Nigel John

(57) **Abstract**

To establish an interface between a program (161, 162) conforming to the distributed object specifications and a program (111, 121-123) not conforming to the distributed object specifications, data of the program conforming to the distributed object specifications is converted into data of a not conforming to the distributed object specifications. For this purpose, a cooperation method makes a program not conforming to the distributed object specifications and an object in a distributed object environment cooperate with each other. The method includes the steps of issuing an event (600) not conforming to the distributed object specifications from a program not conforming to the distributed object specifications (F1), converting the event not conforming to the distributed object specifications into an event (500) conforming to the distributed object specifications and issuing the event (F2, 204), and passing the event conforming to the distributed object specifications to an object in the distributed object environment (F2, 204).

## Description

The present invention relates to a distributed object system.

A distributed object system is a system in which objects distributed on a network cooperate with each other to achieve functions as a whole. An object is a program in which data and a processing procedure (a method) are combined with each other to form a unit. Specifications regarding an object technology to implement a distributed object system include, for example, Common Object Request Broker Architecture (CORBA) prepared by the Object Management Group (OMG) and Distributed Component Object Model (DCOM) of Microsoft. OMG is a trademark of Object Management Group, Inc. in the United States and other countries, CORBA is a registered trademark of Object Management Group, Inc. in the United States and other countries, and Microsoft is a registered trademark of Mcrosoft Corp. in the U.S. and other countries. In CORBA, objects having various functions communicate with each other via an object request broker (ORB), which is a communication path between the objects, to achieve functions as a whole. It is not required to pay attention to a relationship between each object and a machine on the network on which the object is installed. Consequently, only if interface specifications of CORBA are observed, each object can freely expand, modify, and implement its function in the unit of object.

On the other hand, many systems not using the distributed object technology like CORBA (to be referred to as a client-server environment herebelow) have been heretofore developed and have been actually used. For example, there have been used service applications to achieve various types of service processing. The service applications include a schedule function which executes several applications such that the applications cooperate with each other. The schedule function is a function to execute service applications according to a predetermined schedule. For example, the schedule function initiates a service application A at time X, initiates a service application B when application A normally terminates its operation, and initiates a service application C when an error occurs in application A.

The technique of mutually communicating among objects using the object oriented technique is disclosed in USP 5,377,350, for example.

In the prior art, it is fundamentally impossible for a system not using the distributed object technology to call an application (object) conforming to the distributed object specifications to use a function of the application. To use a function of an object in a distributed object environment, it is necessary to modify the system not using the distributed object technology in accordance with the distributed object specifications. For example, to use a function of an object according to CORBA or DCOM, it is required to construct an interface according to the CORBA or DCOM specifications on a calling side.

However, it takes time and expense to modify or to convert a system not using the distributed object technology into a system which conforms to the distributed object specifications. There also exists a system not using the distributed object technology in which a plurality of service applications achieving various types of functions cooperate with each other, for example, in a client-server system. In such a system, it takes time and expense to modify all service applications to operate in a distributed object environment. On the other hand, even if an object according to the distributed object specifications desires to execute part of the functions having been heretofore implemented, it is impossible for a system not associated with the distributed object specifications to call an object in the distributed object environment as described above.

The present invention relates to a method and an apparatus of making a program not conforming to a distributed object environment cooperate and an application conforming to a distributed object environment cooperate with each other.

It is therefore an aim of the present invention to provide a distributed application cooperation method and apparatus of making a program not conforming to a distributed object environment and an object conforming to a distributed object environment cooperate with each other.

To achieve the aim, there is provided in accordance with the present invention a distributed application cooperation method of making a program not conforming to distributed object specifications and an object in a distributed object environment cooperate with each other, comprising a step of issuing an event not conforming to the distributed object specifications from a program not conforming to the distributed object specifications, a step of converting the event not conforming to the distributed object specifications into an event conforming to the distributed object specifications and issuing the resultant event, and a step of passing the event conforming to the distributed object specifications to an object in a distributed object environment.

Moreover, there is provided a distributed application cooperation method of making a program not conforming to distributed object specifications and an object in a distributed object environment cooperate with each other, comprising a step of issuing an event conforming to distributed object specifications from an object in a distributed object environment, a step of converting the event conforming to the distributed object specifications into an event not conforming to the distributed object specifications and issuing the resultant event, and a step of passing the event not conforming to the distributed object specifications to a program not conforming to the distributed object specifications.

Furthermore, the step of converting the event and issuing the event converted favorably conducts operation thereof by referring to an event definition table in which a correspondence relationship between events not conforming to distributed object specifications and events conforming to distributed object specifications. There may be further included a step of preparing information collecting object to collect information regarding an arbitrary object in the distributed object environment and collecting by the information collecting object information regarding an arbitrary object in the distributed object environment and a step of passing the information collected by the information collecting object to a program not conforming to the distributed object specifications.

### BRIEF DESCRIPTION OF THE DRAWINGS

The aim and features of the present invention will become more apparent from the consideration of the following detailed description taken in conjunction with the accompanying drawings in which:
Fig. 1 is a block diagram showing an overall configuration of a system employing a distributed application cooperation method;
Fig. 2 is a flowchart of processing to convert a client-server environmental event into a CORBA environmental event;
Fig. 3 is a flowchart of processing to convert a CORBA environmental event into a client-server environmental event;
Fig. 4 is a diagram showing an example of an event definition table;
Fig. 5 is a diagram showing an example of a data format of a CORBA event;
Fig. 6 is a diagram showing an example of a data format of a client-server environmental event;
Fig. 7 is a diagram showing an example of a failure monitor system; and
Fig. 8 is a diagram showing an example of an information collection system.

### DESCRIPTION OF THE EMBODIMENTS

Referring next to the drawings, description will be given of an embodiment in accordance with the present invention.

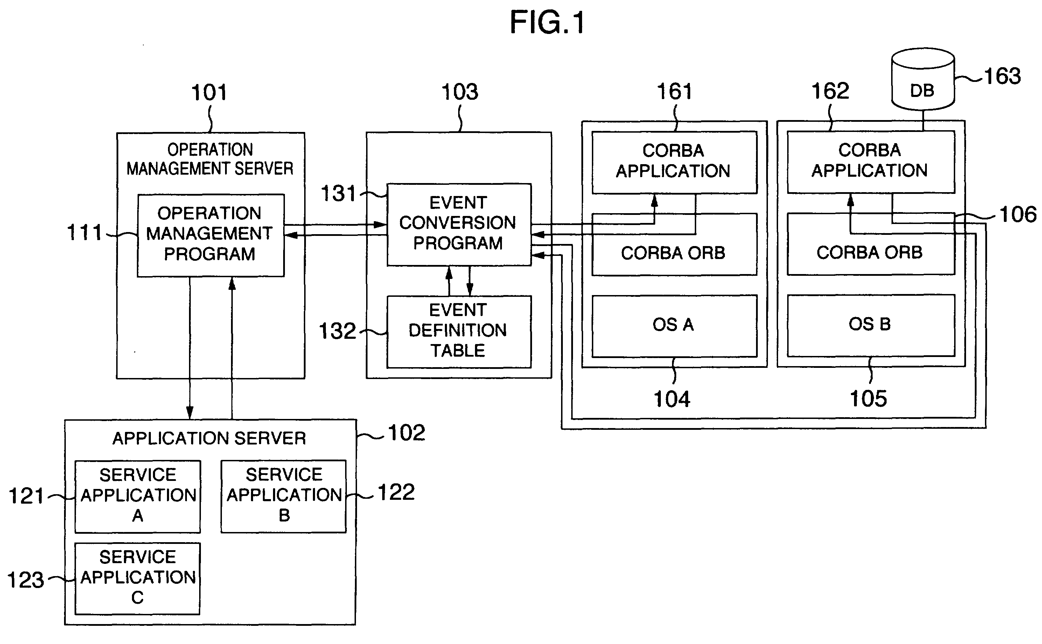

Fig. 1 shows an overall configuration of a system to which a distributed application cooperation method is applied in accordance with the present invention. An operation management program 111 is installed in an operation management server 101 to execute various types of service applications such that the applications cooperate with each other to achieve predetermined services. Various types of service applications 121 to 123 are installed in an application server 102. Operation management program 111 has a schedule function to execute applications in application server 102 according to a predetermined schedule, for example, program 111 initiates a service application A at time X, initiates a service application B when application A normally terminates its operation, and initiates a service application C when an error occurs in application A.

Operation management server 101 and application server 102 operate in a general client-server (C/S) environment, not in a distributed object environment conforming to the CORBA specifications. A service application initiated by operation management program 111 notifies a termination code indicating a result of execution to program 111.

On the other hand, operation management program 111 can use a program (an object) in a distributed object environment. A client-server environmental event to call an object in a distributed object environment is beforehand registered in operation management program 111. When program 111 issues the client-server environmental event, an event conversion program 131 of server 103 converts the pertinent event into an event to initiate an object according to distributed object specifications. Since CORBA is employed as the distributed object specifications in this situation, the event to initiate an object according to a distributed object specification is called a CORBA environmental event.

The CORBA environmental event which has been converted by and issued from event conversion program 131 is passed to a predetermined CORBA application (an object conforming to CORBA specifications) 161 via an object request broker (ORB) 106 of CORBA installed on various types of platforms, for example, OS (operating system) A 104 or OS B 105 and then application 161 initiates its operation.

Conversely, thanks to the event converting function, CORBA application 161 can issue a CORBA environmental event to a program in the client-server environment from CORBA application 161 to thereby make the program having received the CORBA environmental event in the client-server environment execute processing. This occurs, for example, when results of processing of application 161 are returned to operation management program 111 in the client-server environment. For this purpose, CORBA application 161 beforehand registers an event (CORBA environmental event) to sent information to a program in the client-server environment. When application 161 issues the CORBA environmental event, event conversion program 131 of server 103 converts the CORBA environmental event into a client-server environmental event corresponding thereto. The client-server environmental event converted by and issued from program 131 is passed to operation management program 111. As a result, information can be passed from CORBA application 161 to operation management program 111.

In an actual system configuration, event conversion program 131 may be allocated to a server of operation management server 101 or to a server in which CORBA application 161 in the distributed object environment exists. Naturally, event conversion program 131 may be allocated to a server dedicated to event conversion be independent of both of the operation management server and the CORBA application. In this situation, object request broker (ORB) 106 of CORBA is needed to exist in the server to which event conversion program 131 is allocated,.

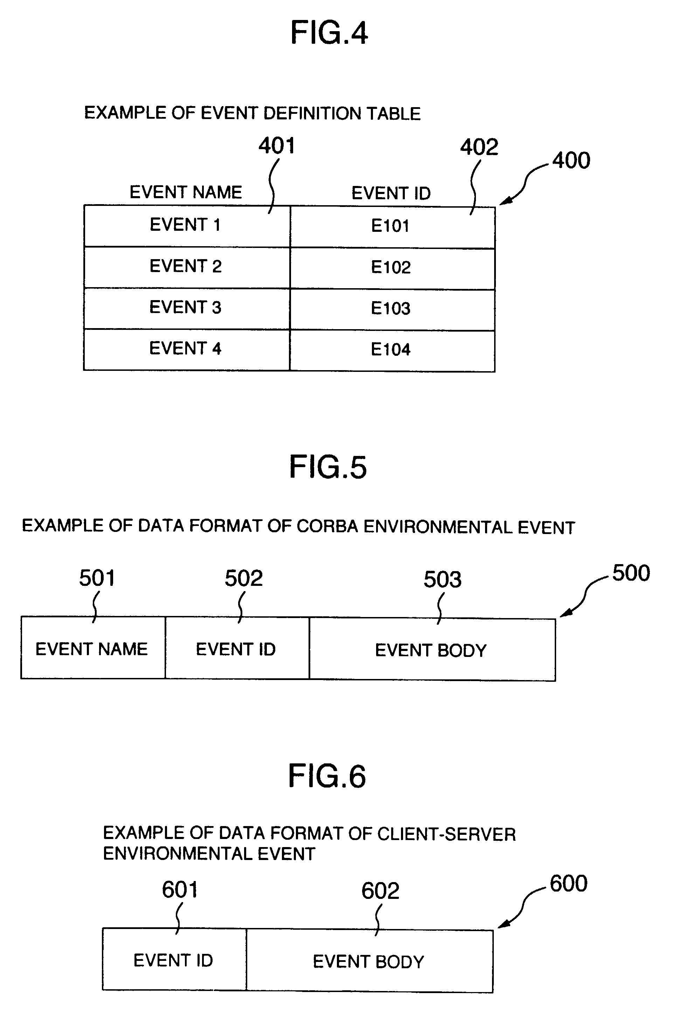

Fig. 4 shows an event definition table 400 (table 132 in Fig. 1) to which event conversion program 131 refers to achieve the conversion between a client-server environmental event and a CORBA environmental event. Table 400 includes a field 401 for an event name and an event identifier (ID) field 402. A name of a CORBA environmental event is registered to event name field 401, and an identifier (ID) of a client-server environmental event corresponding to the CORBA environmental event registered to field 401 is written in event ID field 402.

In conjunction with the embodiment, event definition table 400 including a correspondence between CORBA environmental event names and event identifiers of client-server environmental events has been described as an example. However, information of event bodies of CORBA environmental events and client-server environmental events may be added to the event definition table. There may also be possible to separately disposed a definition table of the event bodies of CORBA environmental events and client-server environmental events to change the contents of the event bodies.

Fig. 5 shows an example of a data format of a CORBA environmental event. A CORBA environmental event 500 includes an event name 501 significant in a CORBA environment, an event ID 502 of a client-server environmental event corresponding to the CORBA environmental event of the event name, and an event body 503 indicating the contents of the CORBA environmental event.

Fig. 6 shows a data format of a client-server environmental event. A client-server environmental event 600 includes an event ID 601 which is an identifier to identify the client-server environmental event and an event body 503 indicating the contents of the client-server environmental event.

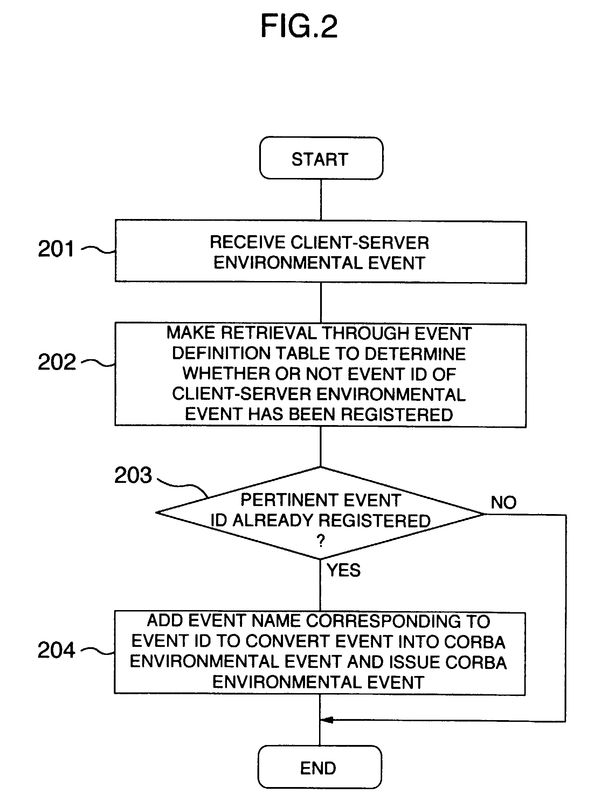

Fig. 2 shows a processing procedure of event conversion program 131 in which a client-server environmental event is received and is converted into a CORBA environmental event to be issued. In step 201, program 131 receives a client-server environmental event (in the format of Fig. 6) issued in a client-server environment. In step 202, program 131 conducts a retrieval to determine whether or not event ID 601 of client-server environmental event 600 received has been registered to event definition table 400 shown in Fig. 4. As a result of the retrieval, if the event ID has been registered to table 400, process goes from step 203 to step 204. Otherwise, the processing is terminated in this state.

In step 204, program 131 converts client-server environmental event 600 into CORBA environmental event 500 (in the format of Fig. 5), issues the CORBA environmental event, and terminates the processing. The conversion into the CORBA environmental event is specifically a step of processing to generate CORBA environmental event 500 in the data format of Fig. 5. Event ID 601 of client-server environmental event 600 is set to event ID 502 of CORBA environmental event 500. An event name corresponding to event ID 601 is read from event definition table 400 to be set to event name 501. Event body 602 of client-server environmental event 600 is converted into a CORBA environmental event and is then set to event body 503.

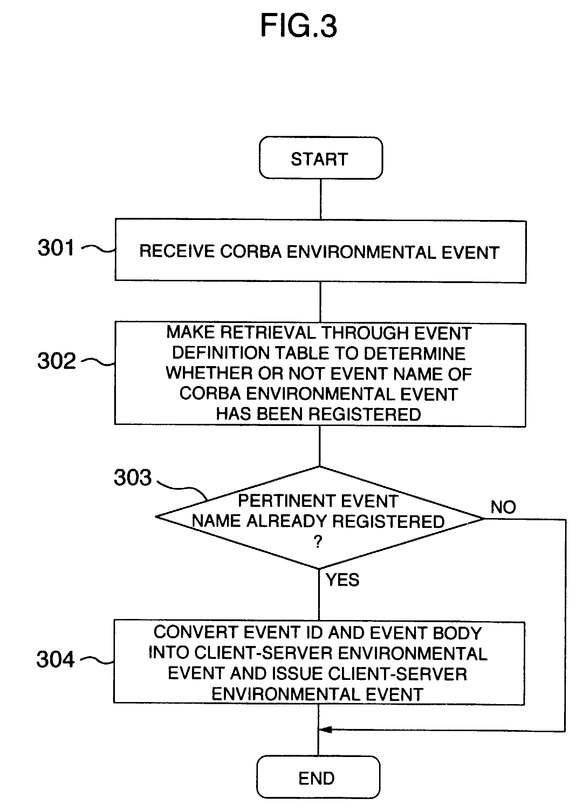

Fig. 3 shows a processing procedure of event conversion program 131 in which a CORBA environmental event is received and is converted into a client-server environmental event to be issued. In step 301, program 131 receives a CORBA environmental event (in the format of Fig. 5) issued in a CORBA environment.

In step 302, program 131 conducts a retrieval through event definition table 400 of Fig. 4 to determine whether or not event name 501 of CORBA environmental event 500 received has been registered to event definition table 400. If event name 501 is an event name registered to table 400, process goes from step 303 to step 304; otherwise, the processing is terminated in this state.

In step 304, program 131 converts CORBA environmental event 500 into client-server environmental event 600 (in the format of Fig. 6), issues the client-server environmental event, and terminates the processing. The conversion into the client-server environmental event is concretely a step of processing to create client-server environmental event 600 in the data format of Fig. 6. Program 131 reads an event ID corresponding to event name 501 of CORBA environmental event 500 from event definition table 400 and sets the event ID to event ID 601 of client-server environmental event 600. In this connection, program 131 accomplishes a check to determine that the event ID read from table 400 matches event ID 502 in CORBA environmental event 500. Program converts event body 503 of CORBA environmental event 500 into an event body in the client-server environment and then sets the event body to event body 602.

In the description in conjunction with Fig. 1, the embodiment includes one operation management program as a program in the client-server environment and one CORBA application 161 as a program in a distributed object environment. However, the number of programs in each environment is not limited to one, namely, an arbitrary number of programs may be used. Additionally, the distributed object environment is not limited to CORBA, namely, another distributed object environment may be used. Between a plurality of programs in the client-server environment and a plurality of programs in a distributed object environment, it is also possible for a program in the client-server environment to call an object in the distributed object environment to use a function thereof by achieving an event conversion by the event conversion program above. Conversely, a program in the client-server environment can receive a request for an action from an object in the distributed object environment. Therefore, it is possible to make a program in the client-server environment and an object in a distributed object environment cooperate with each other.

Description will be next given of a method in which operation management program 111 in the client-server environment collects various kinds of information of CORBA applications (objects) in the system of Fig. 1. First, an information transmission routine is beforehand prepared in a CORBA application of which information is to be collected. The information transmitting routine is configured as an object, which is called "information transmission object". Since this description uses an example to collect information of CORBA application 161 of Fig. 1, an information transmission object is prepared in CORBA application 161.

A CORBA application 162 is a CORBA application (object) to collect information and includes a database (DB) 163. CORBA application 162 will be referred to as information collecting application 162 herebelow. An information transmitting object of CORBA application 161 of which information is to be collected is beforehand registered to information collecting application 162. At a predetermined interval of time, application 162 calls the information transmitting object thus registered. The object called passes various kinds of information such as a state of the associated CORBA application to application 162. For example, the information transmitting object of CORBA application 161 collects various kinds of information regarding application 161 and transfers the information to information collecting application 162. Application 162 stores the information collected for the associated CORBA applications in database 163.

An object (information transmitting object) to pass the collected information to a program in the client-server environment has been prepared in information collecting application 162 in advance.

Operation management program 111 can call the information transmitting object in a method in which event conversion program 131 above is used. The information transmitting object can pass the information which is associated with the respective CORBA applications and which is stored in database 163 above to operation management program 111 via a method using event conversion program 131 as above.

As described above, operation management program 111 can acquire information of database 163 (i.e., a state and the like of CORBA applications) at arbitrary timing or at an arbitrary interval. Consequently, it is possible on the side of the client-server environment to display statistical information regarding CORBA applications and to achieve operation in response to information acquired.

Particularly, in the method of collecting information of service applications in the prior art, information is directly collected at timing of the side which uses respective functions. However, when a plurality of applications exist on the side on which information is collected to be managed, the same information is collected many times. This disadvantageously increases a load (overhead) imposed on the applications to be managed.

When the configuration of the embodiment is employed in this situation, information collecting application 162 exclusively collects the information. Therefore, the same information need not be collected many times and a minimized load is imposed on the applications managed in the CORBA environment. When a request to collect information is received from a plurality of management programs in the client-server environment, it is only necessary to pass thereto the information collected in database 163 by information collecting application 162. This consequently minimizes the overhead to collect information. Even if the number of management programs becomes greater in the client-server environment, the load is only slightly increased.

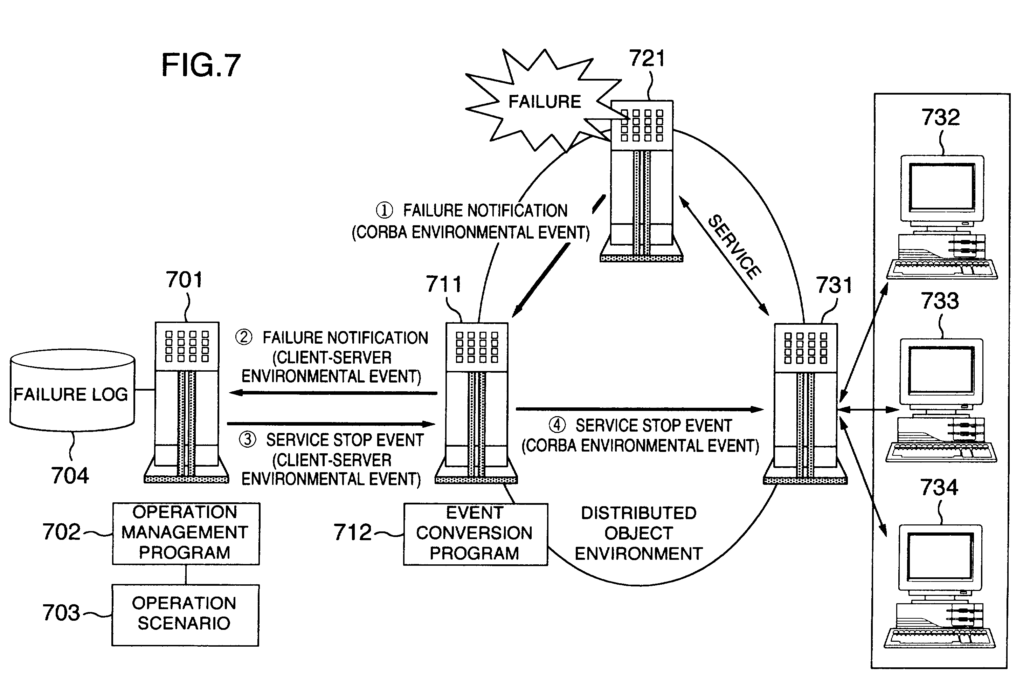

Fig. 7 shows an example of a failure monitor system configured in accordance with the present invention. A monitor server 701 is in a client-server environment in which an operation management program 702 (similar to program 111 of Fig. 1) is operating. Operation management program 702 operates service applications in a distributed object environment or service applications in the client-server environment according to a schedule associated with an operation scenario 703. Monitor server 701 detects a failure taking place in service applications and stores information of the failure in a failure log 704.

A server 711, an application server 721, and a World Wide Web (WWW) server 731 are in a distributed object (CORBA) environment. An event conversion program 712 operates in server 711. Program 712 is similar to program 131 of Fig. 1. Various kinds of service applications (CORBA objects) are installed in application server 721. WWW server 731 is a server to provide clients 732 to 734 with WWW services and can use an object of application server 721 if necessary.

When a failure occurs in application server 721 in a system of this type, a CORBA environmental event is generated to notify the failure as indicated by ①. The CORBA environmental event is converted by event conversion program 712 into a client-server environmental event as described in conjunction with Fig. 1 and is passed to an operation management program of monitor server 701 as indicated by ②. Operation management program 704 records the information regarding the occurrence of the failure in failure log 704 and issues a service stop event (client-server environmental event) as indicated by ③. The service stop event is converted by event conversion program 712 into a service stop event of the CORBA environmental event as described in conjunction with Fig. 1 and is sent to, for example, WWW server 731 as indicated by ④. Thereafter, necessary stop processing is carried out.

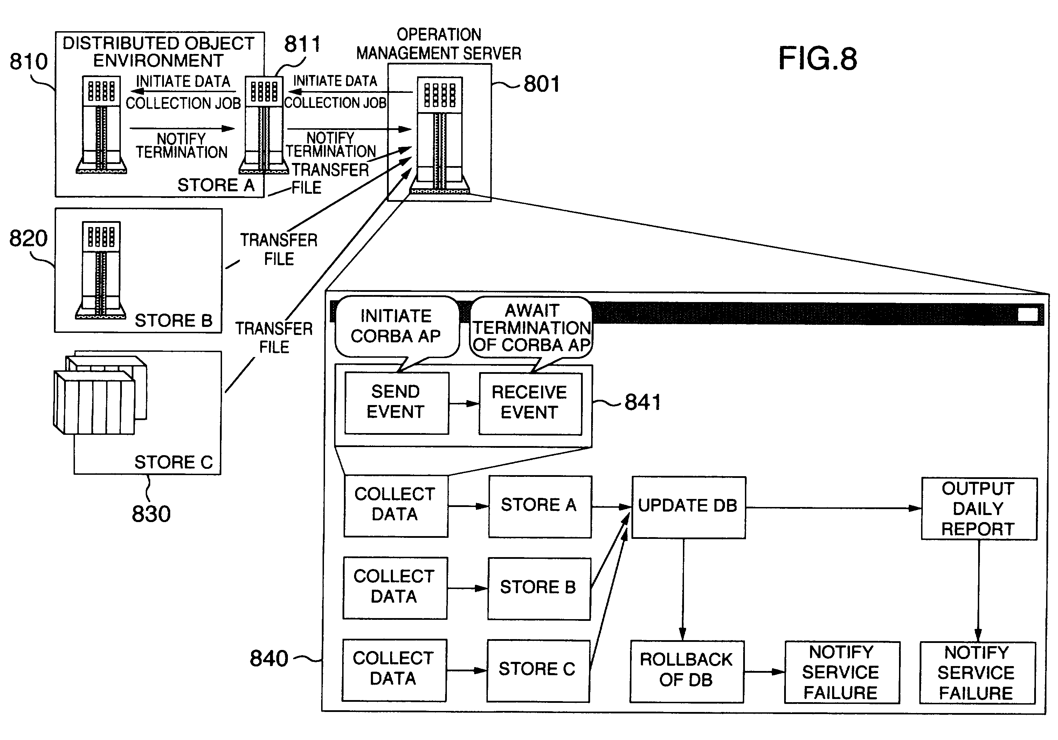

Fig. 8 shows an example of a data collection system implemented in accordance with the present invention. An operation management server 801 is a management server in a client-server environment installed in a management division of a firm. The firm has three stores, i.e., store A, store B, and store C in which store systems 810, 820, and 830 are respectively installed. Store system 810 is constructed in a distributed object environment, store system 820 is configured in a small-sized client-server system, and store system 830 is constructed using a main frame.

In Fig. 8, event conversion program 811 may be allocated to the side of operation management server 801. However, the distributed object environment can be advantageously localized by allocated program 811 to the side of store system 810. That is, the distributed object environment is required to be constructed also in operation management server 801 when program 811 is allocated to the side of operation management server 801. However, when program 811 is allocated to the side of store 810, the distributed object environment is required to be constructed only in store 810 and operation management server 801 is kept unchanged in the client-server environment.

When it is desired to collect data of each store system by operation management server 801, since store system 810 is in a distributed object environment, an event conversion program 811 is arranged to collect data as in the embodiment of the present invention described above. The data collection is conducted in a procedure as follows. Operation management server 801 issues a client-server environmental event of a data collection job. Event conversion program 811 converts the event into an event in a distributed object environment and then issues the event. When store system 810 issues a notification of termination of data collection (an event in a distributed object environment), event conversion program 811 converts the event of the notification of termination into a client-server environmental event and passes the event to operation management server 801.

Moreover, in each of store systems 820 and 830 not in the distributed object environment, for example, operation management server 801 can directly call a file transfer program (ftp) for each store system. The program called sends necessary data to server 801. When the data is completely transmitted, the program notifies termination of data transfer operation to server 801. Thanks to the function, operation management server 801 can collect data in a centralized manner regardless of whether or not the store systems are in the distributed object environment.

A window 840 shows an example of a procedure definition screen to collect data by operation management server 801. Originally, each field of the screen is displayed by an icon. However, the field is displayed by a simple rectangular block in this example. In this procedure, data is collected from each store system to update a database with the collected data and then a daily report is produced or a service failure is notified according to the information of the database. Particularly, in the data collection of store A, data is collected from a system in a distributed object environment. Therefore, it is shown that data is collected by communicating events as indicated by a reference numeral 841.

Although the embodiment is in the CORBA environment in the description, the present invention can be applied to a DCOM environment.

As described above, in accordance with the present invention, an event not conforming to distributed object specifications is converted into an event conforming to distributed object specifications and vice versa such that an event issued in a first environment is converted into an event in a second environment and the converted event is issued. In both environments, it is possible to make programs cooperate with each other, for example, a program not conforming to a distributed object environment can use a function of an object (program) conforming to a distributed object environment and/or information from an object (program) conforming to a distributed object environment can be passed to a program not conforming to a distributed object environment.

Particularly, it is possible to collect information regarding an object in a distributed object environment so as to pass the information to a program not conforming to a distributed object. Consequently, a program not conforming to a distributed object can acquire information regarding an object (program) in a distributed object environment, and the information can be displayed and can be used for management.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A method of converting an event of a distributed application event in which an event (600) issued from a program (111, 121-123) not conforming to distributed object specifications is converted into an event (500) conforming to the distributed object specifications (Fig. 1, 131, 132, Fig. 2) comprising the steps of:
transmitting an event not conforming to the distributed object specifications from a program not conforming to the distributed object specifications (Fig. 1);
converting the event not conforming to the distributed object specifications into an event conforming to the distributed object specifications and issuing the event (Fig. 2, 204); and
passing the event conforming to the distributed object specifications to an object in a distributed object environment (Fig. 2, 204).

2. A method of converting an event of a distributed application event in which an event (500) issued from a program (161, 162) conforming to distributed object specifications is converted into an event (600) not conforming to the distributed object specifications (Fig. 1, 111, 121-123, Fig. 3), comprising the steps of:
transmitting an event conforming to the distributed object specifications from a program conforming to the distributed object specifications (Fig. 3);
converting the event conforming to the distributed object specifications into an event not conforming to the distributed object specifications and issuing the event (Fig. 3, 304); and
passing the event not conforming to the distributed object specifications to a program not conforming to the distributed object specifications (Fig. 3, 304).

3. A method of converting an event of a distributed application event in accordance with Claim 1, wherein
the step of converting the event and issuing the event converted conducts operation thereof by referring to event definition information (Fig. 4, 400) in which a correspondence relationship between events (600) not conforming to the distributed object specifications and events (500) conforming to the distributed object specifications.

4. A method of converting an event of a distributed application event in accordance with Claim 2, wherein
the step of converting the event and issuing the event converted conducts operation thereof by referring to event definition information (Fig. 4, 400) in which a correspondence relationship between events (600) not conforming to the distributed object specifications and events (500) conforming to the distributed object specifications.

5. A method of converting an event of a distributed application event in accordance with Claim 1, further including the steps of:
preparing an information collecting object to collect information regarding an object conforming to the distributed object specifications and collecting by the information collecting object information regarding an object conforming to the distributed object specifications (162); and
passing the information collected by the information collecting object to a program not conforming to the distributed object specifications (162).

6. A method of converting an event of a distributed application event in accordance with Claim 2, further including the steps of:
preparing an information collecting object (161) to collect information regarding an object conforming to the distributed object specifications and collecting by the information collecting object information regarding an object conforming to the distributed object specifications (162); and
passing the information collected by the information collecting object to a program not conforming to the distributed object specifications (162).

7. A method of converting an event of a distributed application event in accordance with Claim 3, further including the steps of:
preparing an information collecting object (161) to collect information regarding an object conforming to the distributed object specifications and collecting by the information collecting object information regarding an object conforming to the distributed object specifications (162); and
passing the information collected by the information collecting object to a program not conforming to the distributed object specifications (162).

8. An apparatus for converting an event of a distributed application event in which an event (600) issued from a program (111, 121-123) not conforming to distributed object specifications is converted into an event (500) conforming to the distributed object specifications (103), comprising:
means for receiving an event not conforming to the distributed object specifications from a program not conforming to the distributed object specifications (131);
means for converting the event not conforming to the distributed object specifications into an event conforming to the distributed object specifications (131, 132); and
means for transmitting the event conforming to the distributed object specifications to an object in a distributed object environment (131).

9. An apparatus for converting an event of a distributed application event (600) in which an event (111, 121-123) issued from a program not conforming to distributed object specifications is converted into an event (500) conforming to the distributed object specifications, comprising:
means for receiving an event conforming to the distributed object specifications from an object conforming to the distributed object specifications (131);
means for converting the event conforming to the distributed object specifications into an event not conforming to the distributed object specifications (131, 132); and
means for transmitting the event not conforming to the distributed object specifications to a program not conforming to the distributed object specifications (131).

10. A data structure for use with a method of converting an event of a distributed application event in which an event (600) issued from a program (111, 121-123) not conforming to distributed object specifications is converted into an event (500) conforming to the distributed object specifications, comprising the steps of transmitting an event not conforming to the distributed object specifications from a program not conforming to the distributed object specifications (Fig. 1), converting the event not conforming to the distributed object specifications into an event conforming to the distributed object specifications and issuing the event (Fig. 2, 204), and passing the event conforming to the distributed object specifications to an object in a distributed object environment (Fig. 2, 204), wherein:
the data structure (Figs. 5 and 6) is used for an event conforming to the distributed object specifications; and
the data structure includes at least an event identifier (ID, 502), an event name (501), and data of an event body (503).

11. A data structure for use with a method of converting an event of a distributed application event in which an event (500) issued from a program (161, 162) conforming to distributed object specifications is converted into an event (600) not conforming to the distributed object specifications, comprising the steps of transmitting an event conforming to the distributed object specifications from a program conforming to the distributed object specifications (Fig. 3), converting the event conforming to the distributed object specifications into an event not conforming to the distributed object specifications and issuing the event (Fig. 3, 304), and passing the event not conforming to the distributed object specifications to a program not conforming to the distributed object specifications (Fig. 3, 304), wherein:
the data structure (Figs. 5 and 6) is used for an event conforming to the distributed object specifications; and
the data structure includes at least an event identifier (ID, 502), an event name (501), and data of an event body (503).

12. A computer-readable recording media (711) in which a program to implement the event conversion method of Claim 1 is stored.

13. A computer-readable recording media (711) in which a program to implement the event conversion method of Claim 2 is stored.

14. An apparatus for converting an event of a distributed application event in accordance with Claim 9 (103), wherein:
the apparatus is installed in either one of the facilities including
a facility in which a program not conforming to the distributed object specifications operates (Figs. 7 and 8),
a facility in which a program conforming to the distributed object specifications operates (Figs. 7 and 8), and
a facility in which a program conforming to the distributed object specifications operates and a facility independent of the facility in which a program conforming to the distributed object specifications operates (Figs. 7 and 8).

15. An information collection system (Fig. 8) using an apparatus for converting an event of a distributed application event in which an event (600) issued from a program (111, 121-123) not conforming to distributed object specifications is converted into an event (500) conforming to the distributed object specifications, comprising:
an information collecting computer (840) including
a function for communicating an event not conforming to the distributed object specifications,
a function for collecting information contained in the event,
a function for updating a database using the information collected, and
a function for producing a daily report or notifying a failure using the information collected;
a store system (820, 830) including
a function not conforming to the distributed object specifications for receiving the event not conforming to the distributed object specifications, the event being sent from the information collecting computer, and
a function for transmitting an event including information corresponding to an event not conforming to the distributed object specifications to the information collecting computer;
a data converting apparatus (811) including
a function for receiving the event not conforming to the distributed object specifications from the information collecting computer,
a function for converting the event not conforming to the distributed object specifications into an event conforming to the distributed object specifications,
a function for transmitting the event conforming to the distributed object specifications to a store system conforming to the distributed object specifications,
a function for receiving an event conforming to the distributed object specifications from the store system conforming to the distributed object specifications,
a function for converting the event conforming to the distributed object specifications into an event not conforming to the distributed object specifications, and
a function for transmitting the event not conforming to the distributed object specifications to the information collecting computer; and
a store system (810) conforming to the distributed object specifications including
a function for receiving an event conforming to the distributed object specifications from the data converting apparatus, and
a function for transmitting an event including information corresponding to the event conforming to the distributed object specifications.

16. A method of converting an event of a distributed application event in accordance with Claim 1, wherein
the distributed object specifications are CORBA specifications or DCOM specifications.

17. A method of converting an event of a distributed application event in accordance with Claim 2, wherein
the distributed object specifications are CORBA specifications or DCOM specifications.

18. An apparatus for converting an event of a distributed application event in accordance with Claim 9, wherein
the distributed object specifications are CORBA specifications or DCOM specifications.
